# EUROPÄISCHE PATENTANMELDUNG

(11) **EP 0 859 297 A1**
(43) Veröffentlichungstag der Anmeldung: **19.08.1998**
(21) Anmeldenummer: 98102642.0
(22) Anmeldetag: 16.02.1998
(51) Int. Cl.: G05B 19/042

(54) **Elektronische Steuerung für Haushaltsgeräte**

(30) Priorität: 17.02.1997 DE 19706117
(71) Anmelder: BSH Bosch und Siemens Hausgeräte GmbH, 81669 München (DE)
(72) Erfinder: Schneider, Ralf, Dipl.-Ing. (FH), 83371 Stein (DE); Beifuss, Wolfgang, Dipl.-Ing., 83339 Chieming (DE); Plankl, Manfred, Dipl.-Ing., 83301 Traunreut (DE)

(57) **Zusammenfassung**

Bekannt ist eine elektronische Steuerung für Haushaltgeräte unter Benutzung serieller Schnittstellen im Bidirektionalen Informationsaustausch mit untergeordneten Gerätegruppen, wobei eine elektronische Steuerung für Haushaltgeräte über eine Takt-, Daten- und Schreib/Leseleitung mit adressierbaren gerätespezifischen Elektronikeinheiten durch einen Master-Slave-Betrieb verbunden ist.

## Beschreibung

Die Erfindung bezieht sich auf eine elektronische Steuerung für Haushaltsgeräte unter Benutzung serieller Schnittstellen im bidirektionalen Informationsaustausch mit untergeordneten Gerätegruppen. Der Stand der Technik bietet für die Übertragung von Daten zur Ansteuerung von Gerätegruppen innerhalb eines Großgerätes, beispielsweise eines Herdes mit Kochfeld oder Waschern oder Spülern, konventionelle Ansteuerungen, die über umfangreiche Kabelbaum oder anderweitige Leitersysteme miteinander kommunizieren. Der Einsatz von zusätzlichen Elektronikanwendungen bzw. Anzeigen und weiteren zusätzlichen Features bei Großgeräten im Haushaltgerätesektor hat für jede weitere Zusatzfunktion dieser Geräte neue Verdrahtungs- und anderweitige Leitungssysteme zur Folge. Für die Verbindung zwischen den Elektronikzentralen und den externen elektronischen Verbrauchern innerhalb der Großgeräte wären dann ebenfalls neue Verbindungsleitungen und Steuerungssysteme notwendig.

Die Aufgabe der Erfindung besteht daher darin, mit minimalem Verdrahtungsaufwand die Kommunikation zwischen einer Elektroniksteuerung und untergeordneten Gerätegruppen innerhalb eines Hausgeräte-Großgerätes zu realisieren.

Die erfindungsgemäße Lösung der Aufgabenstellung besteht darin, daß eine elektronische Steuerung für Haushaltgeräte über eine Takt-, Daten- und Schreib-/Leseleitung mit adressierbaren gerätespezifischen Elektronikeinheiten durch einen Master-Slave-Betrieb verbunden ist. Vorteilhafte Ausgestaltungen der Erfindung sind in den Unteransprüchen enthalten.

Ein Ausführungsbeispiel nach der Erfindung ist im folgenden, anhand der Zeichnung, näher beschrieben.

Es zeigt
- Fig. 1: Ein Prinzipschaltbild der Master-Slave-Steuerung,
- Fig. 2: ein Impulsablauf-Diagramm der Master-Slave-Steuerung.

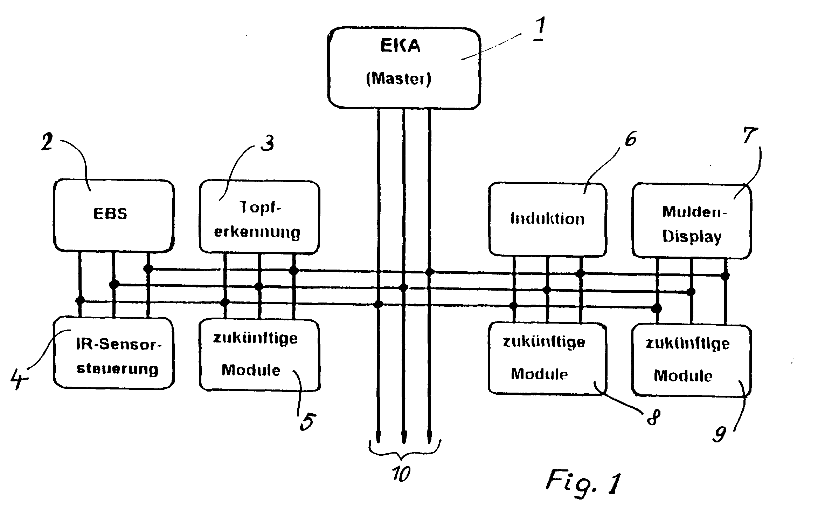

Gemäß Fig. 1 ist eine elektronische Kochautomatik 1, eine elektronische Backofensteuerung 2, eine Topferkennung 3, eine Infrarotsensor-Steuerung 4, ein offener Modul 5, eine Induktionsheizungs-Steuerung 6, ein Muldendisplay 7, weitere offene Module 8, 9 und ein Leitungsbündel 10 innerhalb einer Master-Slave-Steuerug erkennbar.

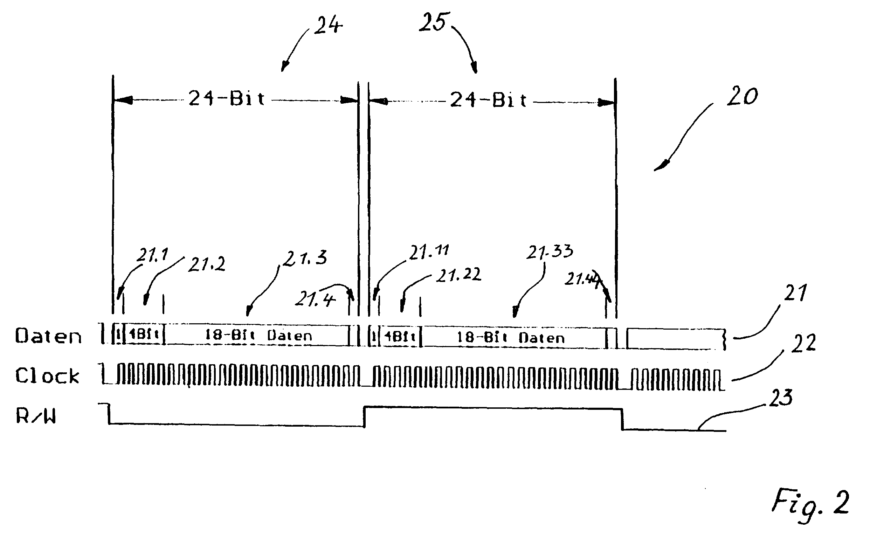

Fig. 2 zeigt zu dem grundsätzlichen Master-Slave-Aufbau gemäß Fig. 1 die zugehörigen Impuls-Diagramme. Das Gesamtdiagramm 20 zeigt einen Datenblock 21, eine Taktfrequenz 22 und eine Lese-Schreib-Leitung 23, wobei der Datenblock in einen Sendeblock 24 und einem Empfangsblock 25 aufgeteilt ist und im einzelnen jeweils ein Startbit 21.1 bzw. 21.11 besitzt, eine Adressbitfolge von der Länge 4 Bit als Sendeadresse unter 21.2 und als Empfangsadresse unter 21.22. 18 Bit Länge sind für die Sendedaten 21.3 bzw. die Empfangsdaten 21.33 vorgesehen. Ein die Datenfolge kontrollierendes Paritybit 21.4 im Sendedatenblock und 21.44 im Empfangsdatenblock komplettiert die gesamte Blocklänge der gesendeten Daten. Aus beiden Figuren folgt, daß die serielle Schnittstelle durch den Master-Slave-Ablauf realisiert ist, wobei sie voll synchron aufgebaut ist und aus einer Takt-, Daten- und Schreib-Leseleitung besteht. Diese drei wesentlichen Leitungen sind im Leitungsbündel 10 vereinigt. Zusätzlich werden im Stecksystem Masse und positive Versorgungsspannung zum Betrieb der Elektronik-Steuerungen in der Mulde übertragen. Grundsätzlich ist diese Master-Slave-Steuerung für alle Haushaltgeräte, die als Großgeräte eine elektronische Steuerung besitzen die mit Untergeräten kommuniziert, anwendbar. Im weiteren wird aber darauf abgestellt, daß das beschriebene und nach den Ausführungsbeispielen dargestellte System Herd-Kochmulde beispielhaft erläutert wird. Fig. 1 verdeutlicht, daß in einem System Herd-Kochfeld folgende Steuerungen miteinander kommunizieren können: elektronische Kochstellensteuerung mit den übrigen Steuerungen, beispielsweise elektronische Backofensteuerung, Displayansteuerung für Mulde, Topferkennung auf der Mulde, Induktionskochen auf der Mulde und eine Infrarotsensor-Steuerung für damit ausgerüstete Kochstellen. Alleiniger Master in diesem System ist die elektronische Kochstellensteuerung (EKA). Das System ist für zukünftige Anforderungen erweiterungsfähig und von der Adressierung auf maximal 16 Teilnehmer ausgelegt.
Außerhalb der Master-Steuerung sind alle übrigen Steuerungen im Slave-Abhängigkeitsverhältnis, von denen keiner die Masterfunktion übernehmen kann. Das Takt- und Schreib/Lesesignal wird ständig vom Master erzeugt. Die Datenübertragung des Masters findet während einer Low-Phase des Lese/Schreibsignales statt. Dabei wird jeweils ein Datenblock mit je 24 Bits übertragen. Der Datenblock gliedert sich auf in ein Startbit, 4 Adressbits, 18 Datenbits und einem Paritybit. Das Startbit zeigt dabei immer eine logische 1. Die 4 Adressbits sind zur Adressierung der Sklaven vorgesehen und können dabei definierte zusätzlich Adressierungen weiterer abhängiger Verbraucher vornehmen. Die 18 Datenbits dienen zur Übertragung von Zustandsinformationen über die Kochstellen und Herdfunktionen. Das abschließende Paritybit überprüft die Sinnfälligkeit der gesendeten, bzw. empfangenen Datenblöcke. Der Master veranlaßt, daß bei jedem von ihm selbst gesendeten Datenblock die Adresse jeweils um 1 erhöht wird. Mit dieser Adressierung wird für das folgende Zeitfenster der Slave festgelegt, der während dieser Zeit im bidirektionalen Frage-Antwort-Spiel der Master-Slave-Verbindung tätig sein darf. Da jedem beteiligtem Slave nur ein festes Zeitfenster zugeordnet ist, werden kollisionen auf der seriellen Schnittstelle relativ einfach verhindert. Über die 4 Adressbits können maximal 16 Untergeräte (Slaves) adressiert werden. Momentan ist die Anlage auf 8 Adressen ausgelegt, womit das Adressbit A3 als ständige logische 0 festgelegt ist. D.h. nach Erreichen der Adresse 7 beginnt der Master wieder bei Adresse 0. Das System wirkt daher wie ein Ringzähler, bei dem ständig von der Mastersteuerung Statusbits übertragen werden, wobei die jeweils angewählten Slave immer im festgelegten Zeitfenster antworten müssen. Durch das ständige Wiederholen der Informationen ist zur Sicherheit bezüglich Bitfehler ein Paritybit, das am Schluß des Datenblocks ständig übertragen wird, ausreichend. Zur weiteren Eindeutigkeit fordert der Master die Identifikation des im Verkehr befindlichen Slave, wobei der Slave seine eigene Adresse im Antwortblock wiederholen muß. Nur bei einer Übereinstimmung von Startbit, Adresse und richtig gesetztem Paritybit werden die Antworttelegramme der Slave-Geräte in das Eingangsregister der Mastersteuerung übernommen. Bei der elektronischen Backofensteuerung 2 besteht zudem die Möglichkeit, die Backofentemperatur in die gewählte Betriebsart über die serielle Schnittstelle an die Display-Ansteuerung der Mulde zu übertragen. Damit können diese Daten dann ebenfalls, wie heute bereits die Knebelstellungen der Kochstellen, unterhalb der Glaskeramik angezeigt werden. Die derzeitig benutzte Taktfrequenz der Mastersteuerung ist auf 2,73 Kiloherz festgelegt worden. Daraus ergibt sich eine Triggerfrequenz der Lese/Schreib-Impulse von ca. 55 Herz. Neben der elektronischen Backofensteuerung kann durch die Mastersteuerung 1 eine Topferkennung 3, eine Infrarotsensorsteuerung 4, eine Induktionskochstelle 6 und ein Muldendisplay 7 adressiert werden. Damit kann die elektronische Kochautomatik als Mastersteuerung veranlassen, das Topferkennungszustände, Zustände der jeweiligen Infrarotsensorsteuerung und das Induktionsgaren elektronisch verarbeitet wird und gegebenenfalls über die Mastersteuerung am Muldendisplay 7 anzeigbar gestaltet wird. Die offenen Modulblöcke 5, 8, 9 können weiteren Elektroniksteuerungen im Slave-Verhältnis zugeordnet werden.

Die Vorteile der geschilderten Master-Slave-Steuerung bei Haushaltgeräten bestehen darin, daR ein schneller und sicherer Datenaustausch zwischen der Steuerung und der von dieser abhängigen Geräten erfolgt, unter Minimierung von Leitungseinsatz, sowohl in Laufzeit als auch hardwaremäßig. So kann über das Leitungsbündel 10 mit drei Signal- und zwei Versorgungsleitungen der Gesamtverkehr abgehandelt werden.

## Patentansprüche

1. Elektronische Steuerung für Haushaltgeräte unter Benutzung serieller Schnittstellen im Bidirektionalen Informationsaustausch mit untergeordneten Gerätegruppen, **dadurch gekennzeichnet**, daß eine elektronische Steuerung (1) für Haushaltgeräte über eine Takt-, Daten- und Schreib/Leseleitung mit adressierbaren gerätespezifischen Elektronikeinheiten durch einen Master-Slave-Betrieb verbunden ist.

2. Elektronische Steuerung für Haushaltgeräte nach Anspruch 1, **dadurch gekennzeichnet**, daß als Haushaltgerät ein Backofen-Mulden-System vorhanden ist, wobei die Masterfunktion durch eine elektronische Kochstellensteuerung (1) ausgeübt wird.

3. Elektronische Steuerung für Haushaltgeräte nach Anspruch 1, 2, **dadurch gekennzeichnet**, daß die elektronische Kochstellensteuerung (1) Datenblöcke von 24 Bit Länge verarbeitet, die durch Schreib/Leseimpulse getriggert sind.

4. Elektronische Steuerung für Haushaltsgeräte nach Anspruch 3, **dadurch gekennzeichnet**, daß die Datenblöcke aus einem Startbit, 4 Adressbits, 18 Datenbits und einem Paritybit bestehen.

5. Elektronische Steuerung für Haushaltgeräte nach Anspruch 1, 2, **dadurch gekennzeichnet**, daß die Master-Takt-Frequenz 2,73 KHz beträgt.

6. Elektronische Steuerung für HHG nach Anspruch 1,2, **dadurch gekennzeichnet**, daß die Triggerfrequenz der Schreib/Leseimpulse etwa 55 Herz beträgt.

7. Elektronische Steuerung für Haushaltgeräte nach Anspruch 1, 2, **dadurch gekennzeichnet**, daß maximal 16 Slave-Geräte durch die Mastersteuerung adressierbar sind.

8. Elektronische Steuerung für Haushaltsgeräte nach Anspruch 1, 2, **dadurch gekennzeichnet**, daß die Funktionseinheiten elektronische Backofensteuerung (2), Topferkennung (3), Infratrot-Sensor-Steuerung (4), Induktionskochen (6) und das Muldendisplay (7) typische Slave-Geräte sind.

9. Elektronische Steuerung für Haushaltsgeräte nach Anspruch 1, **dadurch gekennzeichnet**, daß die Haushaltsgeräte wasserführende Geräte sind.
